# EUROPEAN PATENT SPECIFICATION

(11) **EP 1 320 492 B1**
(45) Date of publication and mention of the grant of the patent: **01.06.2005**
(21) Application number: 01977222.7
(22) Date of filing: 28.09.2001
(51) Int. Cl.: B65D 33/20, C09J 7/02

(54) **RECLOSABLE PACKAGE AND CLOSURE STRIP**
WIEDERVERSCHLIESSBARE VERPACKUNG UND VERSCHLUSSSTREIFEN
EMBALLAGE REFERMABLE ET BANDE DE FERMETURE

(30) Priority: 29.09.2000 US 236949 P
(43) Date of publication of application: 25.06.2003
(73) Proprietor: VELCRO INDUSTRIES B.V., Curacao (AN)
(72) Inventor: MORAN, Kati, L., Chelmsford, MA 01824 (US); SHEPARD, William, H., Amherst, NH 03031 (US)
(74) Representative: Müller-Boré & Partner Patentanwälte
(86) International application number: PCT/US2001/030327
(87) International publication number: WO 2002/026579

(56) References cited:
- FR-A- 1 240 075
- US-A- 3 310 225

## Description

### TECHNICAL FIELD

This invention relates to self-adhesive closures for packages.

### BACKGROUND

In some instances, it is desirable to provide disposable articles with reclosable fasteners. For example, plastic bags for use in storing food (e.g., sandwich bags and similar bags of other sizes) are often provided with a reclosable closure strip. Such closure strips may be formed of a pressure sensitive adhesive, a "tongue and groove" type closure (e.g., "ZIP-LOC" closures), or a hook-and-loop fastener (e.g., a "VELCRO" fastener).

U.S. Patent No. 5,378,536 discloses a repositionable low tack or tack free adhesive including a blend of an elastomeric block copolymer with a tackifying material, and mentions that one of the applications of such a material is in resealable bags. FR 1 240 075 discloses a reclosable, resealable bag.

### SUMMARY

The invention features self-adhesive closures, and products including self-adhesive closures. Generally, the self-adhesive closures include opposed cooperating fastener elements, each fastener element having a self-adhesive surface. The term "self-adhesive", as used herein, refers to a surface that exhibits adhesion to itself (e.g., when the surface is folded over on itself) and to surfaces having similar self-adhesive properties (e.g., when the surface is pressed against a cooperating fastener element), while exhibiting relatively weaker adhesion to dissimilar surfaces and contaminants. Preferred self-adhesive closures exhibit no significant adhesion to dissimilar surfaces and contaminants, and are thus substantially tack-free.

In one aspect, the invention features a package that includes a flexible bag defining an open end, and, positioned to seal the open end, a closure strip including a self-adhesive closure. The flexible bag is formed of a relatively non-self-adhesive material.

In some preferred packages, the self-adhesive closure includes a foam layer. The foam layer provides resiliency to enable the closure to seal around contaminants, such as particulate matter. Moreover, the foam allows for some lateral distortion of the closure without stressing the bond layer. When the closure is flexed, the foam layer can undergo shear distortion through its thickness (i.e., the inner and outer surfaces of the foam layer can be displaced laterally relative to one another) and thus reduce the shear load applied to the bond layer.

Some implementations of the invention include one or more of the following features: The self-adhesive closure includes a pair of opposed fastener elements, each fastener element having a self-adhesive surface. Each fastener element includes a layer of flexible sheet-form material, a flexible foam layer bonded thereto, and a self-adhesive layer covering at least a portion of an outer surface of the flexible foam layer. The self-adhesive layer includes a thermoset elastomer. The foam is closed cell foam. The self-adhesive closure is constructed to provide a watertight seal. The package further includes a second closure strip. The second closure strip includes a hook and loop fastener, or, alternatively, a non-reclosable shelf-seal. The second closure strip is positioned adjacent the self-adhesive closure, e.g., extending substantially parallel to the self-adhesive closure. The package further includes a third closure strip. The self-adhesive closure is positioned between the second and third closure strips. The flexible bag includes a flap constructed to fold over the open end. The closure strip is positioned to seal the flap against an outer surface of the bag. The edges of the flexible bag at the open end lie in the same plane.

In a further aspect, the invention features a closure strip including cooperating fastener elements of a self-adhesive closure, each fastener element being provided in the form of an elongated strip, and including a self-adhesive surface constructed for cooperative engagement with an opposed self-adhesive surface of the other fastener element.

Implementations of this aspect of the invention may include one or more of the following features. Each fastener element includes a layer of flexible sheet-form material, a flexible foam layer bonded thereto, and a self-adhesive layer covering at least a portion of an outer surface of the flexible foam layer. The self-adhesive layer includes a thermoset elastomer. The foam is closed cell foam. The self-adhesive closure is constructed to provide a watertight seal.

The invention also features methods of making bags including self-adhesive closures.

Some preferred self-adhesive closures include a pair of opposed, cooperating self-adhesive fastener elements, each fastener element including a laminate of a flexible sheet material, a flexible foam layer bonded to the flexible sheet material, and a self-adhesive layer coated on an exposed surface of the flexible foam layer.

Note, however, that the flexible sheet material may be supplied as a portion of bag film or other flexible material to which the closure is applied in the packaging application, with the closure itself consisting essentially of a pair of foam strips with self-adhesive layers which are applied to the bag film or other flexible packaging material to provide a releasable closure. Such closures are provided, in some instances, with a heat-sealable bonding layer on the sides of the foam strips opposite the self-adhesive layers, for bonding the closure strips to the packaging material. Such closures can be readily rolled and stored as continuous strip products, to be cut to desired lengths and bonded during a bag-making operation, for example.

Suitable flexible sheet materials include flexible plastic films, e.g., polyethylene, polypropylene, polyvinyl chloride, NYLON, and other flexible sheet materials such as fabrics, non-woven materials and papers. The flexible material should generally have sufficient tear strength so that, when the flexible material is bonded to a selected foam layer, the fastener will resist tearing and permanent deformation during normal use.

Suitable foams are those that have sufficient flexibility and strength to be used in a given application without tearing or interfering with proper operation of the fastener. Suitable foams will also provide the closure with resiliency, to allow the closure strip to seal around contaminants and to allow lateral distortion of the closure strip without stressing of the bond. Preferably, the foam layer is formed of closed cell foam to provide a watertight seal. However, for applications in which ventilation is desired, the foam layer may be advantageously formed of an open cell foam. The thickness of the foam layer will depend upon the application in which the fastener is used. Thinner foam layers (e.g., with a thickness of 0.020 to 0.050 inch or 0.5 to 1.3 millimeters) are more readily run through conventional packaging equipment, and may be more suited for use in premade bags to facilitate dense stacking of the bags. Thicker foam layers (e.g., with a thickness of 0.050 to 0.125 inch or 1.3 to 3.2 millimeters) may be required for applications in which larger grains of particulate matter are to be contained, or for closures that are to be subjected to sharp distortions. Generally, it is preferable that the foam be at least 0.5 times as thick as the largest anticipated grain diameter, preferably as thick. Narrower foam strips (e.g., strips with a width of about 3/16 to 3/8 inch or 5 to 10 millimeters) tend to be easier to open but are less able to seal about particulate matter. Wider foam strips (e.g., strips with a width of about 3/8 to 3/4 inch or 10 to 20 millimeters) can be harder to open but provide more compliance to seal about grains. Suitable foams include polypropylene, polyethylene and polyurethane, among others. The foam layer may be applied to the flexible sheet material in any desired manner, e.g., by lamination, adhesion, or co-extrusion.

The self-adhesive layer is formed of a material that provides a desired degree of self-adhesion, combined with minimal adhesion to dissimilar surfaces and contaminants. Generally, the self-adhesive layer is an elastomer that has been modified to provide self-adhesive properties. Suitable self-adhesive elastomers are described, e.g., in U.S. Patents Nos. 4,791,024, 4,956,228 and 4,985,299.

For many bag closure applications, particularly those configured with interior anti-peel flaps, the optimum peel strength required of the closure is very low, such as about 0.2 to 0.4 pounds per lineal inch (0.35 to 0.7 Newtons per lineal centimeter), for easy opening. Such peel strength is provided, in some embodiments, by the engagement of the self-adhesive layers, and in other embodiments by a combination of the self-adhesive engagement and the engagement of a primary, mechanical or adhesive fastener. The thickness of the self-adhesive layer will depend upon the properties required of the fastener, and the elastomer selected.

Preferably, the self-adhesive elastomer is a thermoset material, particularly for applications which may be subjected to elevated temperatures during storage or use, or which require particularly good dimensional stability. For the self-adhesive material to be suitable for repeated engagement cycles, the cohesive strength of the material (as well as the adhesion of the material to its carrier material, such as the foam layer) must be less than the force required to separate the two engaged layers of self-adhesive material. Furthermore, for a "tack-free" characteristic as regards adhering to other materials, the self-adhesive material should provide little to no adhesion (preferably, no measurable adhesion) to materials other than a contacting layer of similar material. As discussed in the reference patents incorporated above, a suitable adhesive material is an elastomer such as natural rubber dissolved in a solvent such as heptane (with a proportion, for example, of 15% natural rubber and 55% heptane). Another suitable adhesive is a mixture of elastomeric materials, such as natural rubber and butadiene-styrene rubber.

For some applications in which the natural characteristics of a thermoset material are not required, a self-adhering adhesive in the form of a thermoplastic block copolymer, such as that disclosed in U.S. Patent No. 5,378,536, may be employed to advantage.

The self-adhesive layer may be applied to the foam layer using any suitable coating method, e.g., roll-coating or spraying.

The phrase "hook and loop fastener", as used herein, refers to reclosable fasteners that include a male fastener component having a plurality of male fastener elements (e.g., hooks or mushrooms), and a female fastener component constructed for cooperative engagement with the male fastener component. This phrase also refers to reclosable "self-engaging" touch fasteners having an array of male-type fastener elements adapted to engage a similar array of male-type fastener elements to form a releasable closure.

Advantageously, preferred closures of the invention are resealable, repositionable, relatively easy to open and close, provide a watertight seal when closed, and are relatively resistant to contamination, e.g., by dust or larger particulate matter. A closure strip including a self-adhesive closure of the invention can advantageously be used to seal flexible, reclosable packages, such as plastic sandwich and storage bags. Other features and advantages of the invention will be apparent from the description and drawings.

### DESCRIPTION OF DRAWINGS

Figs. 1-7 are schematic perspective views of bags including self-adhesive closures.
Fig. 8 illustrates a second vertical form/fill bagging apparatus, configured to accommodate the closure strip of the invention.
Fig. 8A is an enlarged view of the means for joining the closure strip to the bag web in Fig. 8, with portions removed to show the configuration of the insulator rail and sealing jaws.
Fig. 9 is a cross-sectional view, taken along line 9-9 in Fig. 8.
Fig. 10 shows a first inverted horizontal form/fill packaging apparatus and method, with the closure strip fed into the fin seal between the web flanges.
Fig. 10A is a cross-sectional view, taken along line 10A-10A of Fig. 10.
Fig. 11 shows a second inverted horizontal form/fill packaging configuration, with the closure strip wrapped about the web flanges.
Fig. 11A is a cross-sectional view, taken along line 11A-11A of Fig. 11.
Figs. 12A-12C illustrate three sample self-adhesive closure constructions.
Fig. 13 shows an apparatus and method for forming bags to be filled from an open end opposite their closures.
Fig. 14 is a cross-sectional view, taken along line 14-14 in Fig. 13.
Fig. 15 is an enlarged view of area 15 in Fig. 13, showing the configuration of the closure as applied to the web.
Fig. 16 shows another method for forming pouches, in which the closure strip is bonded to the edges of a sheet of bag film as the film is folded.
Fig. 17 illustrates making reclosable bags from two parallel plastic webs and a closure strip.
Fig. 17A shows a bag made by the process of Fig. 17.

### DETAILED DESCRIPTION

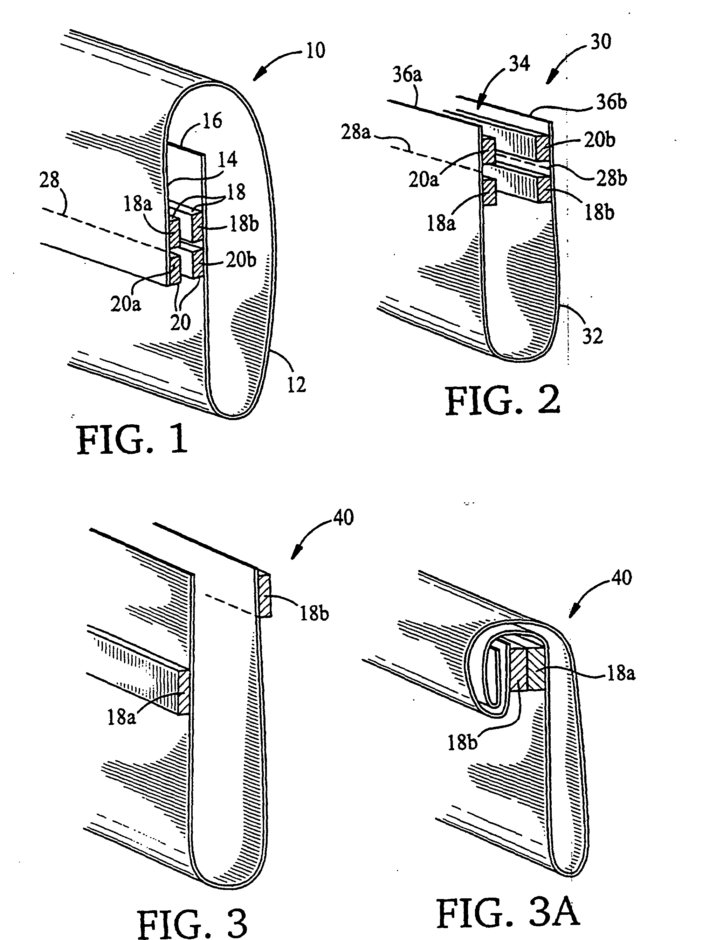

Referring to Fig. 1, an envelope style package 10 is shown. Package 10 includes a body 12 and a flap 14 that extends over upper edge 16 of body 12. Two closures 18, 20, are provided to seal package 10. Each closure includes two opposed, strip-form fastener elements 18a, 18b and 20a, 20b. Closure 18 is a self-adhesive, reclosable closure, while closure 20 is a non-reclosable, primary, shelf seal. Thus, closure 20 provides supplemental sealing and tamper evidence of the package during storage and prior to use, and does not provide any closure function once opened. Closure 20 may be, for example, a peel seal of an adhesive heat seal material containing additives selected to cause the peel seal to peel apart at a peel load lower than would be required to fail the underlying package film. Alternatively, closure 20 may be a permanent joint between opposing faces of packaging film 12, the package including a perforation 28 to allow the user to open the package without breaking the closure strip 20. Closure 18, on the other hand, is reclosable, meaning that it retains its engageable nature after opening to provide a reclosable seal. Closure 18 contains the self-adhesive material featured in the above invention summary.

A face-to-face closing package 30 is shown in Fig. 2. Package 30 includes a body 32 and, at its open end 34, edges 36a, 36b which generally lie in the same plane. Like package 10, package 30 includes a reclosable self-adhesive closure 18 and a shelf seal closure 20. Package 30 also includes perforations 28a, 28b that are constructed to allow a user to easily tear off the shelf seal closure 20. (If desired, the perforation may be provided on one side only, as in a "pinch and pull" type package openable by tearing through a broad face of the package.)

Figs. 3 and 3A show a roll top package 40 in its open and closed configurations, respectively. Roll top package 40 includes a reclosable self-adhesive closure 18 including fastener elements 18a, 18b.

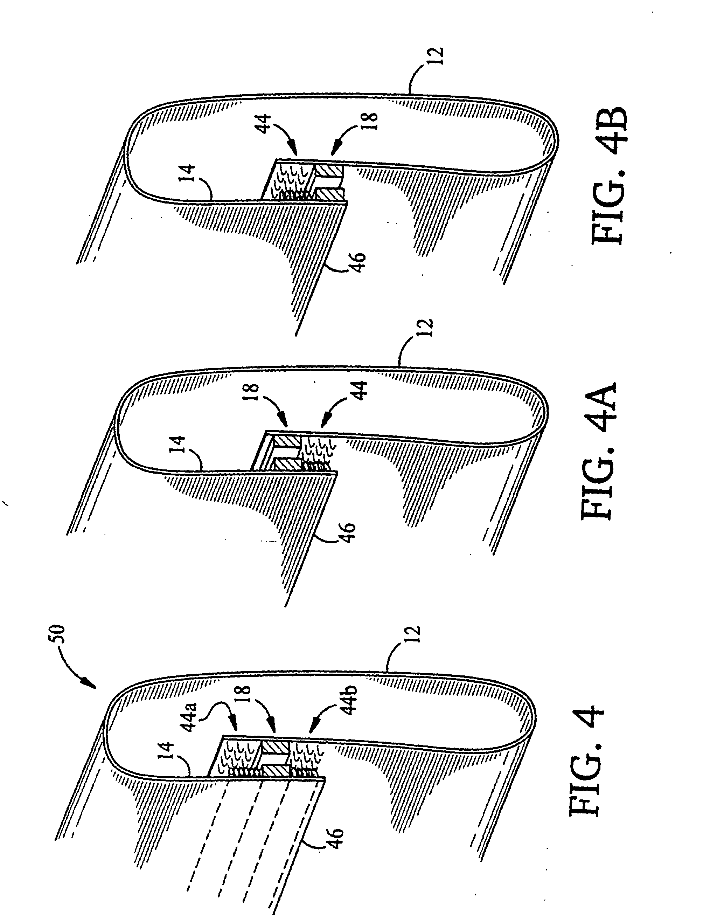

Figs. 4, 4A and 4B show various envelope-style packages that include both a reclosable self-adhesive closure 18 and a hook and loop closure 44. In the embodiment shown in Fig. 4, package 50 includes a reclosable self-adhesive closure 18 interposed between two associated hook and loop closures 44a, 44b. In the embodiment shown in Fig. 4A, a reclosable self-adhesive closure 18 is positioned parallel to a hook and loop closure 44, with the hook and loop closure being positioned closer to the edge 46 of flap 14. In the embodiment shown in Fig. 4B, a reclosable self-adhesive closure 18 is positioned parallel to a hook and loop closure strip 44, with the repositionable self-adhesive closure being positioned closer to the edge 46 of flap 14. In each of the hybrid configurations shown, the hook and loop closure provides mechanical strength (i.e., peel and shear strength) to the closure, while the self-adhesive closure 18 gives the hybrid closure combination a desired degree of watertightness.

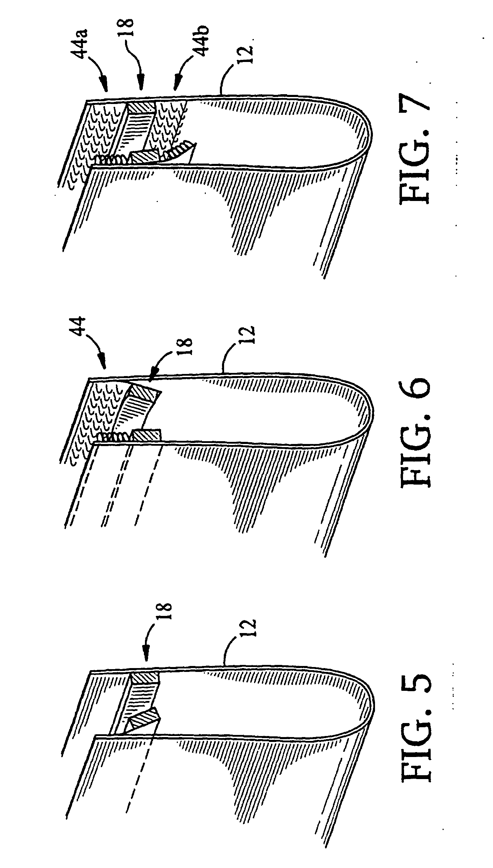

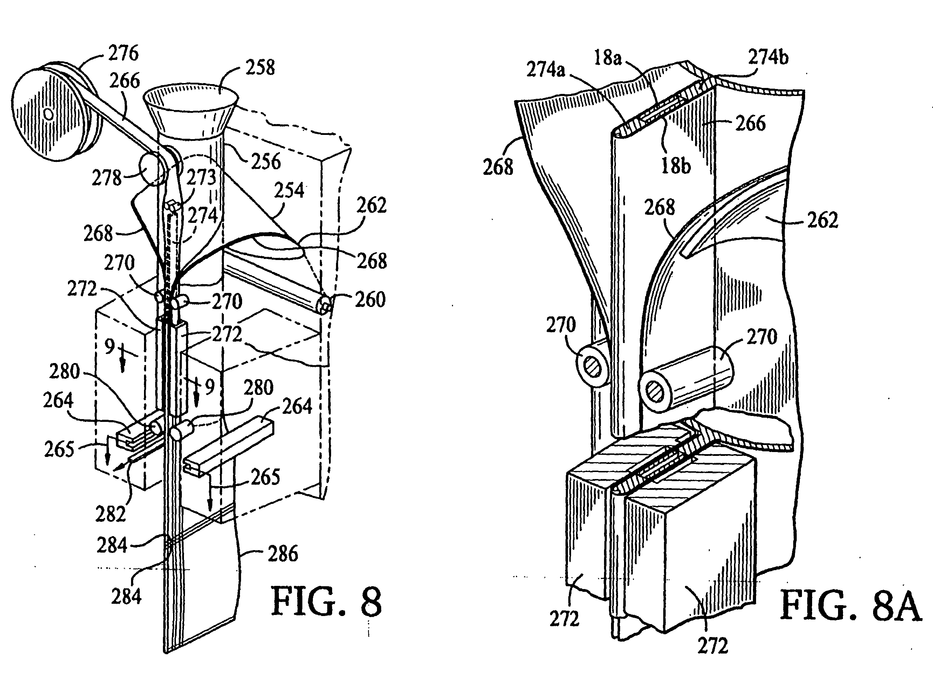

As shown in Figs. 5-7, either the self-adhesive closure 18 (Fig. 5) or one of the sides of a combination closure (Figs. 6 and 7) may be constructed or attached to the packaging film 12 to form an interior "anti-peel" flap of the package, as is described in more detail in U.S. Patent No. 6,202,260.

Figs. 8-16A illustrate examples of processes and equipment that are used to apply closure strips to flexible plastic sheet material to form reclosable bags.

Fig. 8 illustrates a vertical form and fill (VFF) machine configuration for continuously securing the above-described closure strip to a flow of bag-forming web during the forming and filling of individual bags. The bag-forming web consists of a thin sheet of thermoplastic film 254 which is shaped into a tube by being fed over a filling tube 256, which has an upper funnel end 258 through which contents are discharged to fall into individual bags formed of the film. Film 254 is fed from a roll (not shown) over an attitude roller 260, and guided onto the fill tube by curved guide forms 262. In some cases, the film is advanced continuously and the transverse sealing jaws 264 (described below) reciprocate vertically, traveling with the film during the sealing/cutting process (as indicated by arrows 265); in other cases the film is advanced incrementally and the transverse jaws remain within the same horizontal plane.

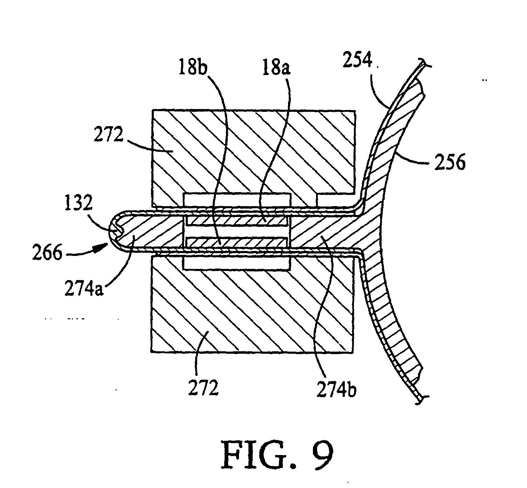

As film 254 is formed into a tube, its two longitudinal edges 268 form flanges extending generally radially from the tube, between which a continuous length of closure strip 266 is fed in a folded condition, such that the edge regions of the web film lie at least partially against the outer sides of the closure strip in face-to-face relation, but do not overlap the folded edge of the closure strip. Guide rollers 270 above the closure sealing bars 272 maintain the adjacency of the sides of the closure strip and the film edges. Closure strip 266 is fed over a pair of counter-rotatable, parallel rollers 273 to separate the mated self-adhesive strips without applying any shearing force, and then over a bisected insulating rail 274 extending longitudinally along the fill tube from above guide rollers 270 to below closure sealing bars 272. As shown in Figs. 8A and 9, bisected insulating rail 274 consists of an outer rail 274a hanging from a supporting rib attaching rail 274a at its upper end to fill tube 256 just below rollers 273, and an inner rail 274b extending radially from tube 256. These twin, parallel rail sections are separated along their length to form a space for accommodating the separated self-adhesive strips to avoid crushing the foam layers of the strips as sealing bars 272 permanently heat seal the closure strip to the edges of the bag film. The spacing of the rail sections 274a, 274b also helps to guide the closure strip through the sealing process. Outer rail 274a also has a notch extending along its distal end, for accommodating a middle grasp rib 132 of the closure strip, if such is provided on the closure strip as discussed in U.S. Patent No. 6,202,260, mentioned above. The primary purpose of insulating rail 274 is to inhibit undesired welding of the inner sides of the closure strip together as the edges of the bag film are welded to the outer surfaces of the closure strip by closure sealing bars 272, and the primary purpose of the longitudinal space between rail sections 274a and 274b is to avoid sliding contact against the self-adhesive surfaces of the closure strip during processing. Other insulating rail constructions are also envisioned for avoiding sliding contact of the self-adhesive material, such as a twin, parallel endless belt arrangement (not shown) to form outer insulating rail sides that contact the self-adhesive surfaces of the closure strip but move along with the closure through the sealing process.

Closure strip 266 may either be spooled from roll 276 over guide roll 278 in a folded condition, as shown with its self-adhesive strips 18a, 18b engaged, and then pulled over rollers 273 to peel apart the self-adhesive strips, or the closure strip may be spooled flat and then folded onto the insulating rail, thereby avoiding having to disengage the self-adhesive sections in the process.

Closure sealing jaws 272 each have a longitudinal groove adjacent the self-adhesive portions of closure strip 266, such that the heated sealing jaws slidingly contact the film edge regions only on either side of the self-adhesive bands of the closure strip, sealing the film to the closure strip in two discrete bands. Sealing jaws 272 have appropriate, embedded heating elements (not shown) to maintain their sealing surfaces at a predetermined, elevated temperature. To leave the inner edge of one side of the closure strip free from the film to form an anti-peel flap, the sealing jaw 272 on that side of the closure may be at least partially recessed, as shown, to avoid bonding the inner edge of that side of the closure strip to the bag film. To form an even wider anti-peel flap, the sealing jaw 272 on one side of the closure may be configured to contact the bag film only outboard of its self-adhesive region.

Immediately below the lower edges of sealing jaws 272, insulating rail 274 terminates and the self-adhesive bands of the closure strip are pressed together between a pair of rollers 280, just above the lower end of fill tube 256.

After a selected amount of contents have discharged through the lower end of the fill tube, transverse sealing jaws 264 come together about the bag film and closure strip and form two parallel, transverse seals 284, each of which will form the sealed edge of a bag. As jaws 264 travel with the advancing film, a cutting knife 282 within the jaws severs the film and closure strip between the transverse seals 284. When jaws 264 open at the end of the sealing cycle, a fully formed, filled and severed bag 286 is complete.

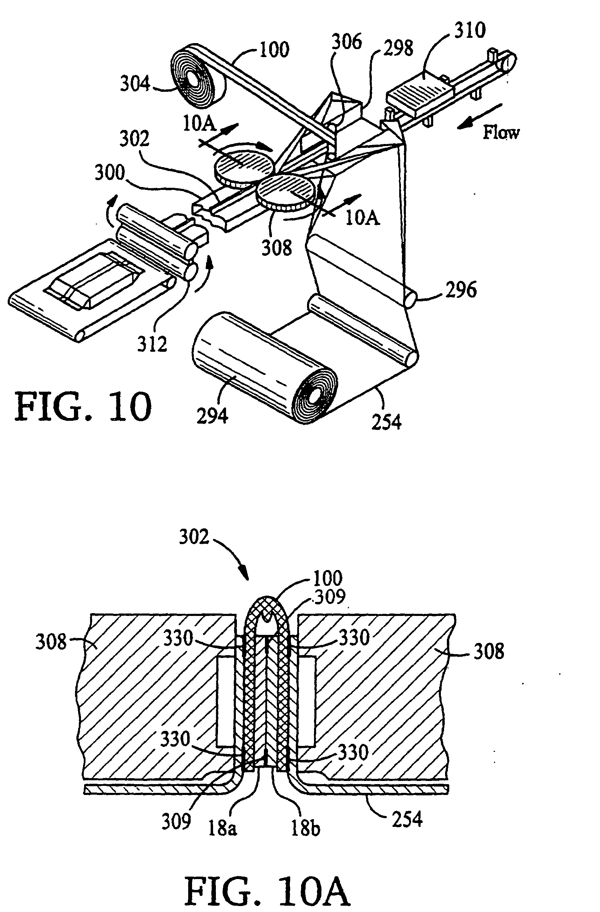

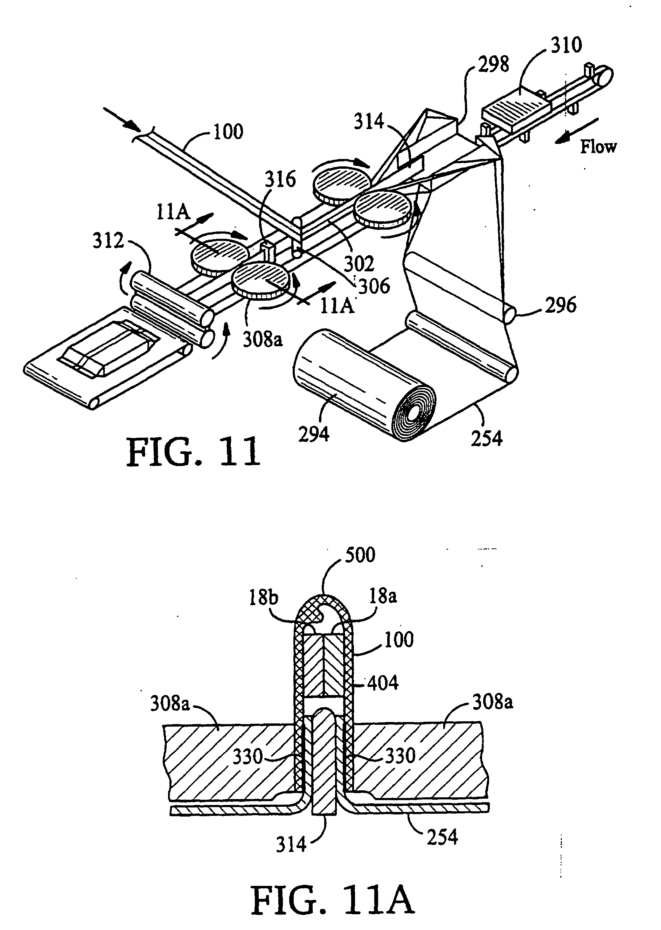

Figs. 10 and 11 illustrate two examples of horizontal form/fill (HFF) machines and processes featuring the above-described closure strips. Referring first to Fig. 10, a bag film 254 is continuously fed from roll 294 over attitude roller 296 and into a forming head 298 shaped to form the film into a rectangular tube 300. As with the VFF method described above, the edges of the film are brought together to form a perpendicular fin 302 extending from one side of the tube. In this case, closure strip 100 is fed from roll 304, folded to engage the hook and loop bands, passed about angled roller 306, and fed into the nip between heated fin seal rollers 308 between the edges of the bag film. Meanwhile individual products 310 to be packaged (e.g., trays of cookies) are fed through the forming head and into film tube 300 at a predetermined spacing and rate corresponding to the speed of the bag film.

As shown in Fig. 10A, the outer surfaces of folded closure strip 100 are permanently welded to the extending film flanges forming the perpendicular fin 302 of the film tube in the nip between fin seal rollers 308. No insulating rail is needed between the inner surfaces of the closure strip in this case because the outer surfaces of rollers 308 are relieved in a region corresponding to the middle portion of self-adhesive closure 18 so as to not apply excessive heat or pressure to the middle portion of the closure, and the edge regions of closure 18 are coated with a non-heat-sealable material 309 to prevent permanent sealing of closure 18. With proper adjustment of the temperature and pressure of rollers 308, which depends on the type of resin employed and the line speed, among other things, at most only a small amount of permanent bonding will occur between the engaged faces of closure 18. This small amount of bonding can advantageously increase the amount of peel force required to initially open the package, leaving a sufficient proportion of undamaged self-adhesive surface to provide adequate engagement upon reclosure.

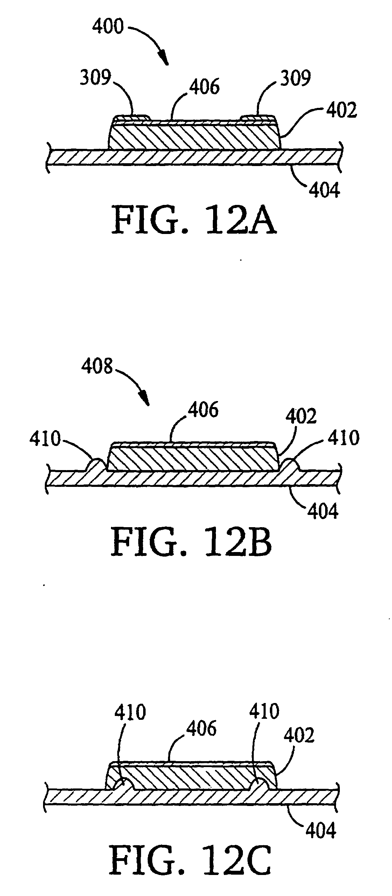

The self-adhesive strip construction 400 of Fig. 12A has a foam layer 402 applied to a thermoplastic base 404 of the closure, a layer of self-adhesive or cohesive material 406 covering the upper surface of the foam layer, and two narrow strips of high melt temperature or heat barrier material 309 (e.g., MYLAR, NYLON or paper) covering the longitudinal edge regions of the cohesive material to prevent permanent face bonding of the closure if processed as shown in Fig. 10A. Fig. 12B shows a strip of adhesive-coated foam 408 applied to base 404 between two longitudinal ribs 410 disposed on either side of foam layer 402 to limit the facial compression of the foam layer during processing or during engagement in use. Both mating strips of a self-adhesive closure can be provided with such ribs integrally molded with their bases 404, such that the ribs of each strip interfere with the ribs of the other strip as the two closure strips are pressed together. Fig. 12C illustrates that foam layer 402 can be applied over ribs 410, such that the ribs are encased by the foam and limit compression of the edge regions of the foam while allowing sufficient compression of the center region to accommodate particulate contamination.

Referring back to Fig. 10, diagonal offset folding rollers (not shown) fold over the fin seal, and a pair of offset rollers 312 carrying a heated seal bar and cutting blade seal the ends of the bags and sever the bags from each other.

Fig. 11 shows a similar HFF process, in which the closure strip 100 is folded over on the outside of both the bag film flanges and a fin seal insulating rail 314 that extends to just downstream of heated fin sealing rollers 308. Passed around angled roller 306, closure strip 100 is folded within a guide channel 316 such that the edges of the closure strip overlap the edges of the bag film, as shown in Fig. 11A. These overlapped regions are welded together on either side of insulating rail 314 by fin sealing rollers 308a, permanently bonding the closure strip to the bag film.

Other fin sealing arrangements will now also be apparent for attaching hybrid or combination closures, such as those featured in Figs. 4-4B, to bag film edges. The hook and loop closure portions of such closures can be arranged to be disposed between the fin sealing rollers, for example, with their self-adhesive portions positioned within the fin seal and outboard of the fin sealing rollers as in Fig. 11A. Alternatively, the self-adhesive portion may be positioned between the fin sealing rollers as in Fig. 10A, with a hook and loop portion disposed outboard of the self-adhesive portion.

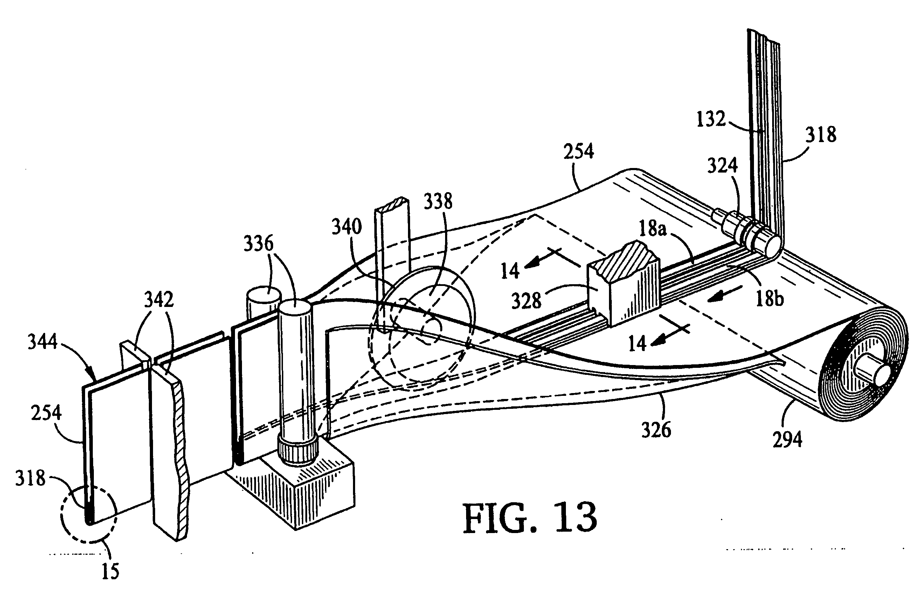

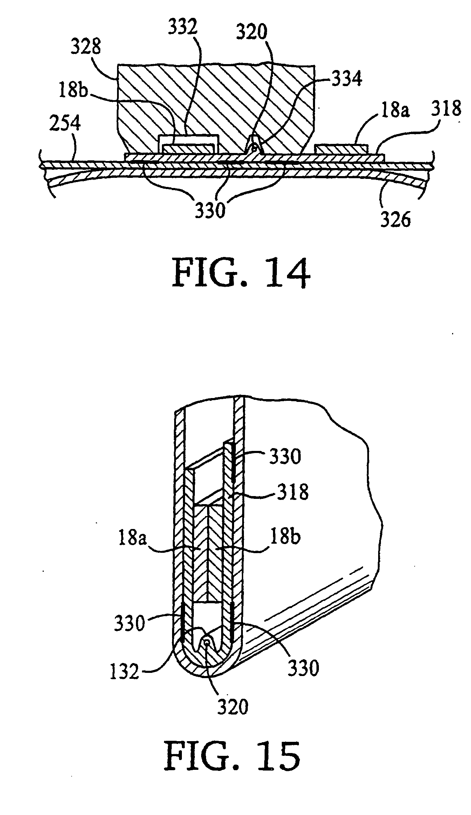

Fig. 13 shows another application of our closure strip in a bag-making process. Closure strip 318 contains a pull cord 320 (Fig. 15) embedded along its central rib 132. The pull cord is configured to tear through the closure strip and bag film longitudinally between the self-adhesive bands when pulled transverse to the closure strip, and therefore must be of sufficient tensile strength to tear through the closure strip resin without breaking. Suitable pull cord materials include drawn nylons, such as fishing line, for example. The pull cord is embedded within the resin of the center closure strip rib by being continuously fed into the rib-forming channel of the mold roll prior to the introduction of the rib-forming resin during molding of the closure strip base.

Closure strip 318 is passed around a guide roller 324 to travel with bag film 254 onto a folding collar 326 where it is permanently bonded to the film under heat and pressure by a sealing shoe 328. As shown in Fig. 14, sealing shoe 328 slidingly engages the closure strip along three bands, forming three continuous welds 330 between the closure strip and bag film 254. Collar 326 supports the bag film against the light pressure applied by the sealing shoe. The channels 332 and 334 in the sealing shoe accommodate a self-adhesive band 18a and center rib of the closure strip, respectively, and maintain the transverse location of the closure strip during bonding. The exposed outer edge of the closure strip is not welded to the bag film in this instance, to provide an internal anti-peel flap in the finished bag, as shown in Fig. 15. Other bonding configurations are employed for various applications.

Once welded together, bag film 254 and closure strip 318 are folded along their longitudinal centerline and passed between two drive rollers 336 that press the cohesive bands of the closure strip together and ensure an appropriate crease along the spine of the closure strip. The folding of the bag film and closure strip is effected by collar 326 and a creasing idler 338 that runs along the center of the closure strip and defines a rim groove 340 for receiving the center rib 132 of the closure strip during folding.

The folded bag film next passes between a pair of reciprocating sealing/cutting jaws 342 which close against the outer surfaces of the bag film to seal the two sides of the folded bag film and the folded closure strip together to form a series of individual pouches, each pouch sealed on three sides and having a single open end 344 for subsequent filling. Jaws 342 may be configured to also sever the pouches from each other during sealing, or to leave the pouches connected in the form of a string of pouches that is readily pulled through an adjacent filling/closing station (not shown).

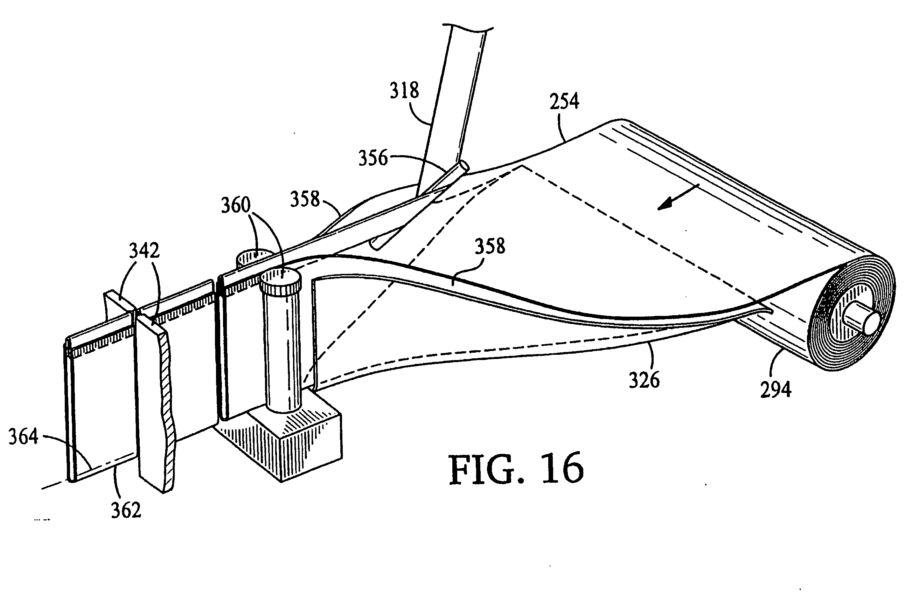

In the bag-forming method shown in Fig. 16, closure strip 318, already folded in half, is fed across an angled roller 356 and between the longitudinal edges 358 of bag film 254 as the film is folded within collar 326. A pair of grooved and heated sealing rollers 360 continuously seals the edge regions of the bag film to the overlapping closure strip. No insulating rail is necessary as the self-adhesive bands of the closure strip are configured as shown in Fig. 12A and the rollers are contoured so as to not bear upon the center region of the foam layers. After passing through edge sealing jaws 342, the folded edge 362 of the bag film is trimmed away along line 364, leaving the ends of the pouches opposite the closure strip open for receiving materials to be packaged. The series of pouches may then be spooled into a roll for sale or later filling.

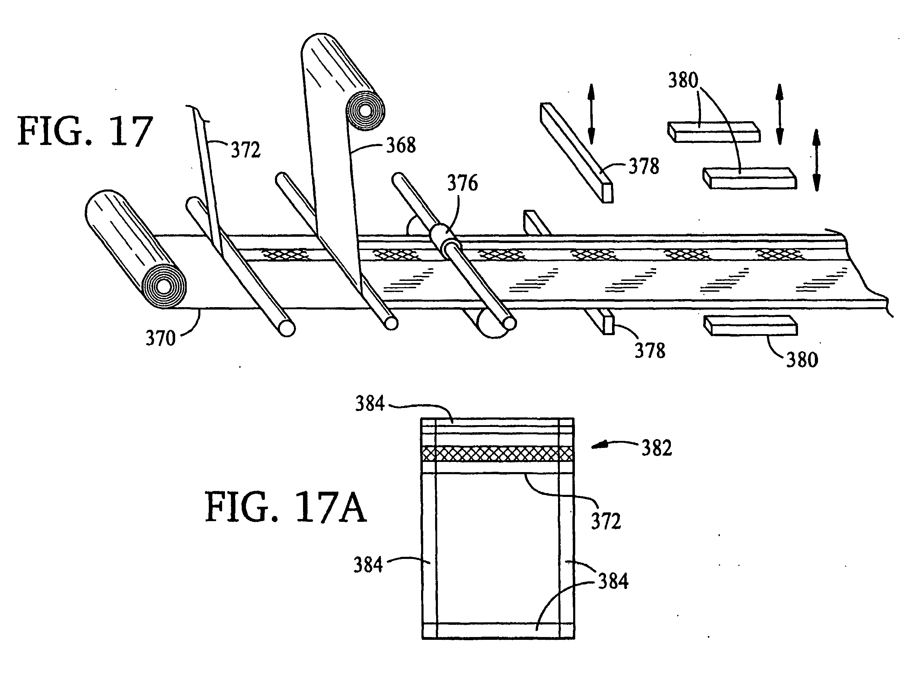

Fig. 17 shows a method of making bags from two separate sheets of bag film and the above-described bag closure strip. Upper and lower plastic films 368 and 370, respectively, are unspooled continuously, with either a pre-folded closure strip, or pre-engaged self-adhesive strips 372, fed between them as shown. The closure strips are each permanently welded to respective inner sides of the plastic films between two rotary sealing rolls 376 (only the upper roll is shown). The parallel films and closure strips are then welded together at spaced intervals by transverse heated sealing jaws 378, forming side seals between adjacent bags which are then filled from their open ends (not shown) and closed by upper and lower sets of sealing jaws 380. This process is also useful, for instance, for forming a series of pre-made bags to be rolled or stacked for later filling.

The bag 382 formed by this process has four side seals 384, as shown in Fig. 17A, along with closure 372. The side seal 384 adjacent and parallel to closure 372 is ripped off to open the bag and expose the closure. In another embodiment (not shown) the side seal 384 adjacent and parallel to closure 372 is omitted, along with the upper set of sealing jaws 380 in Fig. 17, and a folded closure strip is inserted in place of separate strips 372, with the fold of the closure strip pointing outward toward the adjacent side of the continuous films.

## Claims

1. A reclosable package comprising:
a pouch (12,32) of flexible material defining a pocket, the pocket having an openable mouth;
a reclosable, resealable closure attached to the flexible material and positioned to secure and seal the mouth of the pocket, the closure comprising opposing, parallel strips (18a,18b) of foam material (402) secured to respective portions of the flexible material and having outer faces arranged to engage one another when the mouth of the pocket is in a closed state, the outer faces of the foam strips each carrying an exposed, self-adhesive layer (406) for securing and sealing the mouth of the pocket in its closed state.

2. The package of claim 1 wherein the self-adhesive layers (406) substantially cover the outer faces of the strips (18a,18b) of foam material.

3. The package of claim 1 or claim 2 wherein at least one of the self-adhesive layers (406) includes a thermoset elastomer.

4. The package of any of the above claims wherein the foam material (402) is closed cell foam.

5. The package of any of the above claims wherein the closure is constructed to provide a watertight seal.

6. The package of any of the above claims wherein the closure further comprises a primary shelf seal (20).

7. The package of any of the above claims wherein the closure further comprises a pair of mating, mechanical fastener portions (44).

8. The package of claim 7 wherein the mechanical fastener portions include a band of exposed fibers, and an array of projections constructed to releasably fasten to the fibers.

9. The package of claim 7 wherein the mating, mechanical fastener portions are each positioned adjacent one of the strips (18a,18b) of foam material.

10. The package of claim 7 wherein the strips of foam material are disposed within respective, mating bands of mechanical fastening elements.

11. The package of any of the above claims wherein the strips of foam material include
a first strip (18b) permanently attached along an outer surface of the package, and
a second strip (18a) permanently attached inside a flap (14) of said flexible material arranged to be folded over the outer surface of the package for engagement with the first strip.

12. The package of any of the above claims wherein the strips of foam material (18a,18b) each have a thickness of between about 0.020 and 0.125 inch (0.5 and 3.2 millimeters).

13. The package of any of the above claims wherein the self-adhesive material (406) comprises a natural rubber dissolved in a solvent.

14. A closure strip (266,100,318) comprising
a strip-form substrate (404); and
two spaced-apart, parallel bands (18a, 18b) of foam material (402) extending along and carried upon the strip-form substrate, each band having an outer face carrying an exposed, self-adhesive layer (406), the bands arranged to enable their self-adhesive layers to come into contact when the substrate is folded, to form a reclosable seal.

15. The closure strip of claim 14 wherein the self-adhesive layer (406) includes a thermoset elastomer.

16. The closure strip of claim 14 or 15 wherein the foam material (402) is closed cell foam.

17. The closure strip of any of claims 14-16 constructed to provide a watertight seal.

18. The closure strip of any of claims 14-17 wherein in the strip-form substrate (404) also carries an array of loop-engageable protrusions integrally molded with and extending from one broad side of the substrate.

19. The closure strip of claim 18 wherein the strip-form substrate (404) further carries a band of engageable loops spaced apart from the array of protrusions.

20. The closure strip of claim 18 or 19 wherein the substrate (404) is further molded to define a folding region (500) extending along its length between the bands (18a,18b) of foam material.

21. A method of manufacturing a reclosable bag, comprising
forming a bag of flexible film material (12), the bag having an open end; and
providing the open end of the bag with a resealable closure (18), the closure comprising two spaced-apart, parallel bands (18a,18b) of foam material (402) having an outer face carrying an exposed, self-adhesive layer (406), the bands arranged to enable their self-adhesive layers to come into contact to seal the open end of the bag in a closed state.

## Patentansprüche

1. Wieder verschließbare Verpackung, aufweisend:
einen Beutel (12, 32) aus flexiblem Material, der eine Tasche definiert, wobei die Tasche eine zu öffnende Mündung aufweist;
einen wieder verschließbaren, wieder abdichtbaren Verschluss, der an dem flexiblen Material befestigt und angeordnet ist, um die Mündung der Tasche zu schützen und abzudichten, wobei der Verschluss gegenüberliegende, parallele Streifen (18a, 18b) aus Schaumstoff (402) umfasst, die an jeweiligen Abschnitten des flexiblen Materials sicher befestigt sind und Außenseiten aufweisen, die angeordnet sind, um miteinander in Eingriff zu gelangen, wenn sich die Mündung der Tasche in einem geschlossenen Zustand befindet, wobei die Außenseiten der Schaumstoffstreifen zum Schützen und Abdichten der Mündung der Tasche in ihrem geschlossenen Zustand jeweils eine freiliegende, selbstklebende Schicht (406) tragen.

2. Verpackung nach Anspruch 1, wobei die selbstklebenden Schichten (406) im Wesentlichen die Außenseiten der Streifen (18a, 18b) aus Schaumstoff bedecken.

3. Verpackung nach Anspruch 1 oder Anspruch 2, wobei mindestens eine der selbstklebenden Schichten (406) ein durch Wärme härtendes Elastomer aufweist.

4. Verpackung nach irgendeinem der vorstehenden Ansprüche, wobei der Schaumstoff (402) aus geschlossenzelligem Schaumstoff besteht.

5. Verpackung nach irgendeinem der vorstehenden Ansprüche, wobei der Verschluss ausgestaltet ist, um eine wasserdichte Dichtung bereitzustellen.

6. Verpackung nach irgendeinem der vorstehenden Ansprüche, wobei der Verschluss des Weiteren ein primäres Manipulationssiegel (20) umfasst.

7. Verpackung nach irgendeinem der vorstehenden Ansprüche, wobei der Verschluss des Weiteren ein Paar von zusammen passenden, mechanischen Verbindungsabschnitten (44) umfasst.

8. Verpackung nach Anspruch 7, wobei die mechanischen Verbindungsabschnitte ein Band mit freiliegenden Fasern und eine Anordnung mit vorspringenden Elementen einschließen, die so ausgestaltet ist, dass sie sich lösbar mit den Fasern verbindet.

9. Verpackung nach Anspruch 7, wobei die zusammen passenden, mechanischen Verbindungsabschnitte jeweils neben einem der Streifen (18a, 18b) aus Schaumstoff angeordnet sind.

10. Verpackung nach Anspruch 7, wobei die Streifen aus Schaumstoff innerhalb jeweiliger, zusammen passender Bänder mit mechanischen Verbindungselementen angeordnet sind.

11. Verpackung nach irgendeinem der vorstehenden Ansprüche, wobei die Streifen aus Schaumstoff Folgendes einschließen:
einen ersten Streifen (18b), welcher dauerhaft entlang einer Außenseite der Verpackung befestigt ist, und
einen zweiten Streifen (18a), welcher dauerhaft innerhalb einer Klappe (14) des flexiblen Materials befestigt ist, die dergestalt angeordnet ist, dass sie über die Außenseite der Verpackung zum Eingriff mit dem ersten Streifen gefaltet werden kann.

12. Verpackung nach irgendeinem der vorstehenden Ansprüche, wobei die Streifen aus Schaumstoff (18a, 18b) jeweils eine Dicke von zwischen ungefähr 0,020 und 0,125 Zoll (0,5 und 3,2 mm) aufweisen.

13. Verpackung nach irgendeinem der vorstehenden Ansprüche, wobei das selbstklebende Material (406) einen Naturkautschuk umfasst, der in einem Lösungsmittel aufgelöst ist.

14. Verschlussstreifen (266, 100, 318), aufweisend
ein streifenförmiges Substrat (404); und
zwei beabstandete, parallele Bänder (18a, 18b) aus Schaumstoff (402), die sich auf dem streifenförmigen Substrat erstrecken und von ihm getragen werden, wobei jedes Band eine Außenseite aufweist, die eine freiliegende, selbstklebende Schicht (406) trägt, wobei die Bänder dergestalt angeordnet sind, dass ihre selbstklebenden Schichten eine Verbindung eingehen bzw. miteinander in Kontakt kommen können, wenn das Substrat gefaltet ist, um eine wieder verschließbare Dichtung auszubilden.

15. Verschlussstreifen nach Anspruch 14, wobei die selbstklebende Schicht (406) ein durch Wärme härtendes Elastomer aufweist.

16. Verschlussstreifen nach Anspruch 14 oder 15, wobei der Schaumstoff (402) aus geschlossenenzelligem Schaumstoff besteht.

17. Verschlussstreifen nach irgendeinem der Ansprüche 14 bis 16, dergestalt ausgestaltet, dass er eine wasserdichte Dichtung bereitstellt.

18. Verschlussstreifen nach irgendeinem der Ansprüche 14 bis 17, wobei das streifenförmige Substrat (404) außerdem eine Anordnung bzw. ein Feld mit vorspringenden Elementen trägt, die mit Schlaufen eingreifen können und die einstückig mit einer Breitseite des Substrats geformt sind und von dieser aus hervorstehen.

19. Verschlussstreifen nach Anspruch 18, wobei das streifenförmige Substrat (404) des Weiteren ein Band mit Schlaufen trägt, die in Eingriff gebracht werden können, welches von der Anordnung mit vorspringenden Elementen beabstandet ist.

20. Verschlussstreifen nach Anspruch 18 oder 19, wobei das Substrat (404) des Weiteren dergestalt geformt ist, dass es einen Faltbereich (500) definiert, welcher sich seiner Länge nach zwischen den Bändern (18a, 18b) aus Schaumstoff erstreckt.

21. Verfahren zum Herstellen eines wieder verschließbaren Beutels; aufweisend
Ausbilden eines Beutels aus flexiblem Folienmaterial (12), wobei der Beutel ein offenes Ende aufweist; und
Bereitstellen eines wieder abdichtbaren Verschlusses (18) an dem offenen Ende des Beutels, wobei der Verschluss zwei beabstandete, parallele Bänder (18a, 18b) aus Schaumstoff (402) aufweist, die eine Außenseite aufweisen, welche eine freiliegende, selbstklebende Schicht (406) trägt, wobei die Bänder dergestalt angeordnet sind, dass sie ihren selbstklebenden Schichten ermöglichen, in Verbindung bzw. in Kontakt zu gelangen, um das offene Ende des Beutels in einem geschlossenen Zustand abzudichten.

## Revendications

1. Emballage refermable comprenant :
un sac (12, 32) en matière flexible définissant une poche, la poche ayant une bouche ouvrable,
une fermeture refermable, rescellable, attachée à la matière flexible et positionnée pour fixer et sceller la bouche de la poche, la fermeture comprenant des bandes (18a, 18b) parallèles opposées de matière en mousse (402) fixées à des parties respectives de la matière flexible et ayant des faces extérieures agencées pour entrer en prise l'une avec l'autre quand la bouche de la poche est dans un état fermé, les faces extérieures des bandes en mousse portant chacune une couche autoadhésive (406) exposée pour fixer et sceller la bouche de la poche dans son état fermé.

2. Emballage de la revendication 1, dans lequel les couches autoadhésives (406) couvrent sensiblement les faces extérieures des bandes (18a, 18b) de matière en mousse.

3. Emballage de la revendication 1 ou de la revendication 2, dans lequel au moins une des couches autoadhésives (406) comprend un élastomère thermodurci.

4. Emballage d'une quelconque des revendications ci-dessus, dans lequel la matière en mousse (402) est de la mousse à cellules fermées.

5. Emballage d'une quelconque des revendications ci-dessus, dans lequel la fermeture est construite pour fournir un scellement imperméable à l'eau.

6. Emballage d'une quelconque des revendications ci-dessus, dans lequel la fermeture comprend en outre un scellement de conservation primaire (20).

7. Emballage d'une quelconque des revendications ci-dessus, dans lequel la fermeture comprend en outre une paire de parties de fixation (44) mécanique conjuguées.

8. Emballage de la revendication 7, dans lequel les parties de fixation mécanique comprennent une bande de fibres exposées et un groupe de protubérances construites pour se fixer de manière détachable aux fibres.

9. Emballage de la revendication 7, dans lequel les parties de fixation mécanique conjuguées sont positionnées de manière adjacente à l'une des bandes (18a, 18b) de matière en mousse.

10. Emballage de la revendication 7, dans lequel les bandes de matière en mousse sont disposées dans les bandes conjuguées respectives d'éléments de fixation mécanique.

11. Emballage d'une quelconque des revendications ci-dessus, dans lequel les bandes de matière en mousse comprennent une première bande (18b) attachée de manière permanente le long d'une surface extérieure de l'emballage et une deuxième bande (18a) attachée de manière permanente à l'intérieur d'une patte (14) de ladite matière flexible agencée pour être pliée au-dessus de la surface extérieure de l'emballage pour entrer en prise avec la première bande.

12. Emballage d'une quelconque des revendications ci-dessus, dans lequel les bandes (18a, 18b) de matière en mousse ont chacune une épaisseur entre environ 0,5 et 3,2 millimètres (0,020 et 0,125 pouce).

13. Emballage d'une quelconque des revendications ci-dessus, dans lequel la matière autoadhésive (406) comprend un caoutchouc naturel dissous dans un solvant.

14. Bande de fermeture (266, 100, 318) comprenant un substrat (404) en forme de bande, et
deux bandes (18a, 18b) parallèles espacées de matière en mousse (402) s'étendant le long du substrat en forme de bande et portées par celui-ci, chaque bande ayant une face extérieure portant une couche autoadhésive (406) exposée, les bandes étant arrangées pour permettre aux couches autoadhésives d'entrer en contact, quand le substrat est plié, pour former un scellement refermable.

15. Bande de fermeture de la revendication 14, dans laquelle la couche autoadhésive (406) comprend un élastomère thermodurci.

16. Bande de fermeture de la revendication 14 ou de la revendication 15, dans laquelle la matière en mousse (402) est de la mousse à cellules fermées.

17. Bande de fermeture d'une quelconque des revendications 14 - 16 construite pour fournir un scellement imperméable à l'eau.

18. Bande de fermeture d'une quelconque des revendications 14 - 17, dans laquelle le substrat (404) en forme de bande porte aussi un ensemble de protubérances pouvant s'engager dans des boucles, intégralement moulées avec un côté large du substrat et s'étendant à partir de celui-ci.

19. Bande de fermeture de la revendication 18, dans laquelle le substrat (404) en forme de bande porte en outre une bande de boucles pénétrables à distance de l'ensemble de protubérances.

20. Bande de fermeture de la revendication 18 ou de la revendication 19, dans laquelle le substrat (404) est en outre moulé pour définir une région pliante (500) s'étendant le long de sa longueur entre les bandes (18a, 18b) de matière en mousse.

21. Procédé de fabrication d'un sac refermable, consistant
à former un sac en matière pelliculaire flexible (12), le sac ayant une extrémité ouverte, et
à équiper l'extrémité ouverte du sac d'une fermeture (18) rescellable, la fermeture consistant en deux bandes (18a, 18b) parallèles espacées de matière en mousse (402) ayant une face extérieure portant une couche autoadhésive (406) exposée, les bandes étant agencées pour permettre à leurs couches autoadhésives d'entrer en contact pour sceller l'extrémité ouverte du sac dans un état fermé.
